# EUROPÄISCHE PATENTSCHRIFT

(11) **EP 3 040 849 B1**
(45) Veröffentlichungstag und Bekanntmachung des Hinweises auf die Patenterteilung: **13.03.2019**
(21) Anmeldenummer: 15150029.5
(22) Anmeldetag: 02.01.2015
(51) Int. Cl.: G06F 3/14, B60K 37/06, G06F 3/0484, G06F 3/0488, B60K 35/00

(54) **Fortbewegungsmittel, Anwenderschnittstelle und Verfahren zur übergreifenden Anzeige eines Anzeigeinhaltes auf zwei Anzeigeeinrichtungen**
Means of locomotion, user interface and method for displaying display content on two display devices
Moyen de transport, interface utilisateur et procédé destiné à faire chevaucher un contenu d'affichage sur deux dispositifs d'affichage

(43) Veröffentlichungstag der Anmeldung: 06.07.2016
(73) Patentinhaber: Volkswagen AG, 38436 Wolfsburg (DE)
(72) Erfinder: Wild, Holger, 10179 Berlin (DE); Kötter, Nils, 38126 Braunschweig (DE)
(74) Vertreter: Hoefer & Partner Patentanwälte mbB

(56) Entgegenhaltungen:
- EP-A2- 2 261 793
- WO-A1-2010/042101
- DE-A1-102012 022 312
- FR-A1- 2 971 878

## Beschreibung

### Stand der Technik

Die vorliegende Erfindung betrifft ein Fortbewegungsmittel, eine Anwenderschnittstelle sowie ein Verfahren zur übergreifenden Anzeige eines Anzeigeinhaltes einer Anwenderschnittstelle auf mindestens zwei Anzeigeeinrichtungen eines Fortbewegungsmittels. Insbesondere betrifft die vorliegende Erfindung intuitive Anwenderbedienschritte zur Erweiterung einer einem Anzeigeinhalt zugeordneten Darstellungsfläche.

Moderne Fortbewegungsmittel weisen eine Vielzahl Funktionen auf, welche über Schalter und Bildschirme angezeigt und bedient werden können. In dem Bestreben, den Innenraum von Fahrzeugen mit möglichst wenigen Schaltern auszustatten, werden immer mehr Inhalte und Einstellungen auf immer größere Anzeigeeinrichtungen (z.B. Touchscreens) verlagert. Durch die große zur Verfügung stehende Fläche besteht ein zunehmendes Bestreben der Entwickler darin, die Flexibilität der Nutzung der Fläche sowie die Anzeige-/Bedienergonomie für den Anwender bestmöglich zu gestalten. Hierbei sind auch Ansätze bekannt, einer bestimmten Funktion zugeordnete Anzeige-/Bedienelemente zunächst auf einer ersten Anzeigeeinrichtung im Fortbewegungsmittel darzustellen und im Ansprechen auf eine vordefinierte Anwendergeste auf eine zweite Anzeigeeinrichtung zu verschieben. Auf diese Weise kann beispielsweise einem Anwenderwunsch zur Anpassung der Darstellungsposition entsprochen werden.

WO 2010/042101 A1 offenbart ein Infotainment-System eines Fortbewegungsmittels mit einem anteilig hinter einem Lenkrad angeordneten Bildschirm, auf welchem durch den Lenkradkranz optisch eingeschlossene Anzeigemodule von außerhalb des Lenkradkranzes angeordneten Anzeigemodulen unterschieden werden. Im Ansprechen auf eine vordefinierte Anwendereingabe kann eine Informationseinheit zwischen den Anzeigemodulen bewegt werden. Eine entsprechende Vorrichtung ist der DE 10 2009 036 371 A1 zu entnehmen.

DE 10 2009 046 010 A1 offenbart eine Fahrzeuginformationsanzeige mit hierarchisch gegliederten Informationsanzeigeebenen. Über eine Anwendereingabe kann eine bestimmte Informationsanzeigeebene zur Anzeige gebracht werden.

WO 2010/042101 A1 offenbart eine Anwenderschnittstelle für ein Fortbewegungsmittel, deren Anzeigeelemente (first display module/second display module) in unterschiedlichen Blickbereichen des Anwenders (z.B. im Bereich eines Kombiinstrumentes bzw. im Bereich eines zentralen Informationsdisplay (CID)) angeordnet sind. Um eine temporäre Sichtung eines außerhalb eines primären Sichtbereiches angeordneten Anzeigeinhaltes im primären Sichtbereich zu ermöglichen wird vorgeschlagen, eine Anwendergeste zu erkennen und im Ansprechen auf diese den Anzeigeinhalt (erstmalig) auch auf der im primären Sichtbereich des Anwenders befindlichen Anzeigeeinheit darzustellen.

DE 10 2012 022 312 A1 offenbart ein Informationswiedergabesystem, welches ein einziges Display aufweist, welches zwei informationstechnisch definierte Teilflächen mit einer Grenze im Ansprechen auf eine vordefinierte Anwendergeste (Wischgeste) derart modifiziert, dass die Grenze verschoben und ein Verhältnis der Teilflächen verändert wird.

EP 2 261 793 A2 offenbart ein Verfahren zum Übertragen von Anzeigeinhalten von einem ersten Bildschirm auf einen zweiten Bildschirm. Zunächst nur auf einem Bildschirm angezeigte Inhalte können im Ansprechen auf eine Wischgeste auf eine andere Anzeigeeinheit übertragen werden.

FR 2 971 878 A1 offenbart eine Anwenderschnittstelle für ein Fortbewegungsmittel mit einer mehrteiligen Anzeige. Mittels einer vordefinierten Wischgeste können Anzeigeinhalte von einem ersten Teil der Anzeige in einen zweiten Teil der Anzeige verschoben werden.

Untersuchungen haben gezeigt, dass frei wählbare Positionen für auf unterschiedlichen Anzeigeeinrichtungen anzeigbare Informationselemente die Orientierung des Anwenders erheblich erschweren.

Es ist daher eine Aufgabe der vorliegenden Erfindung, die Orientierung eines Anwenders bei der flexiblen Nutzung mehrerer Anzeigeeinrichtungen in einem Fortbewegungsmittel zu unterstützen bzw. zu verbessern.

### Offenbarung der Erfindung

Die vorliegend identifizierte Aufgabe wird erfindungsgemäß durch eine Anwenderschnittstelle und ein Verfahren zur übergreifenden Anzeige eines Anzeigeinhaltes einer Anwenderschnittstelle eines Fortbewegungsmittels gelöst. Die Erfindung beruht auf der Erkenntnis, dass eine logische Verankerung eines Funktionsumfangs bzw. eines Informationsumfangs mit einer einzigen Anzeigeeinrichtung die Orientierung des Anwenders verbessern kann. Das Fortbewegungsmittel kann beispielsweise ein PKW, ein LKW, ein Motorrad, ein Luft- und/oder Wasserfahrzeug sein. In einem ersten Schritt wird ein erster Anzeigeinhalt auf einer ersten Anzeigeeinrichtung (z.B. ein Bildschirm) des Fortbewegungsmittels angezeigt. Die Anzeigeeinrichtung kann auch zur Entgegennahme von Anwendereingaben ausgestaltet sein und hierzu beispielsweise eine berührungsempfindliche Oberfläche zur Auflösung von Ein- oder Mehrfingergesten aufweisen. Der Anzeigeinhalt sei als ein solcher Bereich verstanden, welcher einem vordefinierten Funktionsumfang der Anwenderschnittstelle bzw. des Fortbewegungsmittels zugeordnet ist. Insbesondere können Fahrzeugfunktionen, Unterhaltungsfunktionen und Informationen eines vordefinierten Themengebietes als optisches Cluster den ersten Anzeigeinhalt ausmachen. Der Anzeigeinhalt kann als Fenster, beispielsweise mit einem Rahmen, ausgestaltet und/oder mit einer intransparenten oder teiltransparenten Hintergrundfarbe optisch hervorgehoben werden. Der Anzeigeinhalt kann beispielsweise Bedienflächen und/oder Schaltflächen aufweisen, über welche Funktionen des Anzeigeinhaltes mittels Anwendereingaben beeinflusst werden können. Anschließend wird eine vordefinierte Anwendereingabe bezüglich des ersten Anzeigeinhaltes empfangen. Mit der Anwendereingabe äußert der Anwender den Wunsch, die Darstellungsfläche für den Anzeigeinhalt zu vergrößern und insbesondere zusätzliche Informationen/Eingabeelemente innerhalb des Anzeigeinhalts anzuzeigen. Hierzu wird im Ansprechen auf die empfangene Anwendereingabe eine dem ersten Anzeigeinhalt zugeordnete Fläche auf einer zweiten Anzeigeeinrichtung des Fortbewegungsmittels erweitert. Beispielsweise kann hierbei der zuvor ausschließlich auf der ersten Anzeigeeinrichtung dargestellte Anzeigeinhalt anteilig auf die zweite Anzeigeeinrichtung erweitert werden, wobei dem Anzeigeinhalt zusätzliche Informations- und/oder Bedienelemente hinzugefügt werden. Dies schließt jedoch nicht aus, dass bereits vor dem Empfangen der vordefinierten Anwendereingabe bezüglich des Anzeigeinhaltes die zweite Anzeigeeinrichtung bereits einen Flächenbereich zur Darstellung des Anzeigeinhaltes reserviert und/oder verwendet haben kann. Die erfindungsgemäß vorgeschlagene Erweiterung kann also eine erstmalige Anzeige des von Teilen des Anzeigeinhaltes oder eine zusätzliche Anzeige von Inhalten des Anzeigeinhaltes bedeuten. In jedem Fall wird die zweite Anzeigeeinrichtung nach dem Erweitern von einem vergrößerten Flächenbereich des Anzeigeinhaltes eingenommen, wobei eine dem ersten Anzeigeinhalt zugeordnete Fläche auf der zweiten Anzeigeeinrichtung der ersten Anzeigeeinrichtung nächstliegend angeordnet ist. Auf diese Weise kann eine (temporär) erweiterte Nutzung der zweiten Anzeigeeinrichtung für den Anzeigeinhalt erfolgen, ohne dass der Anwender den optischen Bezug zwischen dem Anzeigeinhalt und der ersten Anzeigeeinrichtung verliert.

Die Unteransprüche zeigen bevorzugte Weiterbildungen der Erfindung.

Bevorzugt wird die erste Anzeigeeinrichtung auch nach dem Erweitern des Anzeigeinhaltes auf die zweite Anzeigeeinrichtung zur (anteiligen) Darstellung des Anzeigeinhaltes verwendet. Dieser auf der ersten Anzeigeeinrichtung verbliebene Teil des Anzeigeinhaltes sorgt als optischer und logischer "Anker" für den Anzeigeinhalt. Insbesondere wird die Darstellung des auf der ersten Anzeigeeinrichtung dargestellten Anzeigeinhaltes durch das erfindungsgemäße Erweitern nicht beeinflusst. Bevorzugt bleibt zumindest die dem Anzeigeinhalt auf der ersten Anzeigeeinrichtung zugeordnete Fläche der Größe und/oder der Form nach erhalten. Dies schließt nicht aus, dass einzelne Elemente innerhalb des Anzeigeinhaltes nach dem Erweitern des Anzeigeinhaltes auf die zweite Anzeigeeinrichtung eine andere Größe und/oder eine andere Gestalt und/oder eine andere Position aufweisen, von welchen letztere auch auf der zweiten Anzeigeeinrichtung angeordnet sein kann. Auf diese Weise wird eine flexible Nutzung unterschiedlicher Anzeigeeinrichtungen unter Beibehaltung eines logischen Bezuges des Anzeigeinhaltes zur ersten Anzeigeeinrichtung möglich.

Während der vorgenannte Anzeigeinhalt (nachfolgend "erster Anzeigeinhalt") auf der zweiten Anzeigeeinrichtung erfindungsgemäß erweitert wird, kann ein bereits zuvor auf der zweiten Anzeigeeinrichtung angezeigter zweiter Anzeigeinhalt fortwährend (anteilig) angezeigt werden. Mit anderen Worten wird der erste Anzeigeinhalt nicht auf die gesamte Fläche der zweiten Anzeigeeinrichtung erweitert und bleibt nach der erfindungsgemäßen Erweiterung durch Anteile des zweiten Anzeigeinhaltes umgeben. Dies verstärkt den Eindruck des Anwenders, dass die erfindungsgemäße Erweiterung des ersten Anzeigeinhaltes auf die erste Anzeigeeinrichtung lediglich temporär zu verstehen ist und verstärkt somit den logischen Bezug desselben zur ersten Anzeigeeinrichtung.

Der erste Anzeigeinhalt kann zur Verstärkung einer Abgrenzung (bzw. zur Entgegenwirkung des Eindrucks einer Verschmelzung des ersten Anzeigeinhaltes und des zweiten Anzeigeinhaltes) einen optisch geschlossenen, gegenüber dem zweiten Anzeigeinhalt auf der zweiten Anzeigeeinrichtung erscheinenden Rand gekennzeichnet sein. Insbesondere kann der Rand durch eine geschlossene Randlinie zwischen dem ersten Anzeigeinhalt und dem zweiten Anzeigeinhalt ausgestaltet sein. Eine einfache und optisch höchst wirksame Maßnahme kann darin bestehen, dem ersten Anzeigeinhalt eine andere Hintergrundfarbe als dem zweiten Anzeigeinhalt zu verleihen. Insbesondere kann die Hintergrundfarbe des ersten Anzeigeinhaltes den zweiten Anzeigeinhalt überdecken (der Hintergrund des ersten Anzeigeinhalt ist also lediglich unvollständig oder überhaupt nicht transparent). Alternativ oder zusätzlich kann der erste Anzeigeinhalt durch eine optische Hervorhebung der Randlinie nach Art eines Rahmens oder eines Schattens auf dem zweiten Anzeigeinhalt gegenüber dem zweiten Anzeigeinhalt abgegrenzt werden. Alternativ oder zusätzlich kann der zweite Anzeigeinhalt nach der erfindungsgemäßen Erweiterung verschwommen und/oder abgedunkelt und/oder mit geringerem Kontrast und/oder verkleinert (in die Zeichenebene hinein verschoben) und/oder mit einer geringeren Sättigung, insbesondere sepiafarben oder gräulich dargestellt werden, um den optischen Fokus auf der Bedienbarkeit des ersten Anzeigeinhaltes zu lenken und dennoch den temporären Charakter der Erweiterung des ersten Anzeigeinhaltes hervorzuheben.

Um die erfindungsgemäße Erweiterung des ersten Anzeigeinhaltes auf die zweite Anzeigeeinrichtung rückgängig zu machen, kann beispielsweise eine Wischgeste in Richtung der ersten Anzeigeeinrichtung vorgesehen sein, welche insbesondere bezüglich des auf der zweiten Anzeigeeinrichtung erweiterten Anzeigeinhaltes, zumindest aber unter Bezug auf die zweite Anzeigeeinrichtung durchgeführt bzw. erfasst wird. Die im Rahmen der vorliegenden Erfindung durchgeführten Wischgesten können als berührende Eingaben auf einer berührungsempfindlichen Oberfläche einer Eingabeeinrichtung (z.B. ein Touchscreen) und/oder als frei im Raum ausgeführte (3D-)Gesten ausgeführt werden. Alternativ oder zusätzlich kann eine Tippgeste auf den zweiten Anzeigeinhalt auf der zweiten Anzeigeeinrichtung oder auf einen vordefinierten Bereich innerhalb des erweiterten ersten Anzeigeinhaltes auf der zweiten Anzeigeeinrichtung als Steuerbefehl dafür vorgesehen sein, dass die Erweiterung des ersten Anzeigeinhaltes (zumindest anteilig) rückgängig gemacht wird. Mit anderen Worten wird im Ansprechen auf die vorgenannten Anwendereingaben die dem ersten Anzeigeinhalt zugeordnete Fläche auf der zweiten Anzeigeeinrichtung verringert. Beispielsweise kann eine im Rahmen der Erweiterung verschobene Randlinie des ersten Anzeigeinhaltes in Richtung der ersten Anzeigeeinrichtung verschoben werden. In Abhängigkeit der gewählten Position der Randlinie bzw. der gewählten Größe der auf der zweiten Anzeigeeinrichtung dargestellten Fläche des ersten Anzeigeinhaltes können die enthaltenen Informations-/Bedienelemente dynamisch bezüglich ihrer Position und/oder Größe und/oder Gestalt angepasst werden. Dies unterstützt die bestmögliche und flexible Nutzung des ersten Anzeigeinhaltes sowie der insgesamt zur Verfügung stehenden Anzeigefläche der Anzeigeeinrichtungen des Fortbewegungsmittels.

Gemäß einem zweiten Aspekt der vorliegenden Erfindung wird eine Anwenderschnittstelle für ein Fortbewegungsmittel vorgeschlagen, welche eine erste Anzeigeeinrichtung (z.B. ein Bildschirm, "Sekundärbildschirm"), eine zweite Anzeigeeinrichtung (z.B. ein Bildschirm, "Primärbildschirm"), eine Erfassungseinheit zur Erfassung von Anwendergesten (z.B. umfassend eine berührungsempfindliche Oberfläche und/oder eine kapazitive Eingabeeinrichtung und/oder eine optische Erfassungseinrichtung zur Auflösung dreidimensionaler Anwendergesten) und eine Auswerteeinheit (z.B. umfassend einen programmierbaren Prozessor, Mikrocontroller, Nanocontroller o.ä.) umfasst. Die erste Anzeigeeinrichtung ist eingerichtet, einen ersten Anzeigeinhalt anzuzeigen. Die Erfassungseinheit ist eingerichtet, eine vordefinierte Anwendereingabe bezüglich des ersten Anzeigeinhaltes zu empfangen. Die Auswerteeinheit ist eingerichtet, im Ansprechen auf das Erfassen der vordefinierten Anwendereingabe eine dem ersten Anzeigeinhalt zugeordnete Fläche auf der zweiten Anzeigeeinrichtung des Fortbewegungsmittels auszuweiten. Die erste Anzeigeeinrichtung kann beispielsweise als Sekundärbildschirm zur Anordnung in einem unteren Bereich eines Armaturenbrettes (z.B. insbesondere zur Anzeige und/oder Bedienung von Heiz-/Klimaumfängen und/oder Anzeige von Bedienelementen zur Einflussnahme auf grundlegende Funktionen einer Medienwiedergabe und/oder einer Routenführung) ausgestaltet sein. Die zweite Anzeigeeinrichtung kann beispielsweise als eine größere und zur zentralen Anordnung in einem Armaturenbrett eines Fortbewegungsmittels vorgesehene Matrixanzeige (zentrales Informationsdisplay) ausgestaltet sein. Die Erfassungseinheit kann eine Infrarot-LED-Leiste aufweisen, mittels welcher Annäherungsgesten und andere frei im

Raum ausgeführte Gesten eines Anwenders erfasst werden können. Alternativ oder zusätzlich kann die Erfassungseinheit eine sogenannte "Fingerleiste" zur Entgegennahme mechanisch geführter Wischgesten eines Anwenders aufweisen, wie sie beispielsweise in der von der Anmelderin unter dem Aktenzeichen DE 13166985 beim DPMA eingereichten Patentanmeldung beschrieben worden ist, deren Inhalt hiermit durch Bezugnahme einbezogen wird.

Bevorzugt können die ersten Anzeigeeinrichtung und die zweite Anzeigeeinrichtung bezüglich einer ersten Richtung hintereinander bzw. nebeneinander bzw. untereinander angeordnet sein. Beispielsweise kann die erste Richtung im Wesentlichen vertikal orientiert sein, wodurch sich eine Anordnung der Anzeigeeinrichtung übereinander (z.B. im Armaturenbrett des Fortbewegungsmittels) ergibt. Entsprechend kann die erste Richtung im Wesentlichen horizontal orientiert sein, wodurch sich eine Anordnung der Anzeigeeinrichtungen im Wesentlichen nebeneinander (z.B. im Armaturenbrett eines Fortbewegungsmittels) ergibt. Bevorzugt können die Anzeigeeinrichtungen unterschiedliche Größen und/oder unterschiedliche Seitenverhältnisse aufweisen. Dies kann eine besonders umfassende Nutzung der im Armaturenbrett verfügbaren Fläche unterstützen.

Die Breite der ersten Anzeigeeinrichtung bezüglich der ersten Richtung (also die Ausdehnung der ersten Anzeigerichtung quer zur ersten Richtung) kann kleiner als eine entsprechende Breite der zweiten Anzeigeeinrichtung bezüglich der ersten Richtung sein. Mit anderen Worten ist diejenige Anzeigeeinrichtung, welcher der erste Anzeigeinhalt originär zugeordnet ist, schmaler als die zweite Anzeigeeinrichtung. Bevorzugt erfolgt hierbei das Erweitern der dem ersten Anzeigeinhalt zugeordneten Fläche auf der zweiten Anzeigeeinrichtung ausschließlich auf der Breite der ersten Anzeigeeinrichtung. Mit anderen Worten bleibt der erste Anzeigeinhalt auf der zweiten Anzeigeeinrichtung auf die Breite der ersten Anzeigeeinrichtung beschränkt. Dies verstärkt den logischen und optischen Bezug zwischen dem ersten Anzeigeinhalt und der ersten Anzeigeeinrichtung.

Weiter bevorzugt kann eine dem ersten Anzeigeinhalt zugeordnete Fläche auf der ersten Anzeigeeinrichtung der zweiten Anzeigeeinrichtung nächstliegend angeordnet sein. Insbesondere ist die erste Anzeigeeinrichtung auf ihrer gesamten Breite dem ersten Anzeigeinhalt zugeordnet. Einander benachbarte Flächen auf den Anzeigeeinrichtungen stellen somit den ersten Anzeigeinhalt mit geringstmöglichem Abstand an der Stoßstelle zwischen den Anzeigeeinrichtungen dar. Auf diese Weise wird der erste Anzeigeinhalt bestmöglich als zusammenhängende Sinn- und/oder Funktionseinheit (auch "Fenster" oder "Kachel") wahrgenommen.

Die Anwendereingabe zur erfindungsgemäßen Erweiterung des ersten Anzeigeinhaltes auf der zweiten Anzeigeeinrichtung kann beispielsweise eine Wischgeste in Richtung einer Mitte der zweiten Anzeigeeinrichtung sein. Eine solche Wischgeste stellt eine besonders intuitive und in einem großen Flächenbereich ausführbare Anwendereingabe zur Erweiterung des ersten Anzeigeinhaltes dar. Alternativ oder zusätzlich kann eine Tipp-Geste auf eine Schaltfläche zur Erweiterung des ersten Anzeigeinhaltes vordefiniert sein. Die Schaltfläche kann beispielsweise in einem der ersten Anzeigeeinrichtung nächstliegenden Flächenbereich der zweiten Anzeigeeinrichtung oder in einem der zweiten Anzeigeeinrichtung nächstliegenden Flächenbereich der ersten Anzeigeeinrichtung dargestellt werden. Mit anderen Worten ist die Schaltfläche bevorzugt an einer solchen Stelle angeordnet, an welcher sich aktuell eine solche Randlinie des ersten Anzeigeinhaltes befindet, welche es bei der Erweiterung zu verschieben bzw. neu anzuordnen gilt.

Gemäß einem dritten Aspekt der vorliegenden Erfindung wird ein Computerprogrammprodukt vorgeschlagen, auf welchem Instruktionen gespeichert sind, die einen programmierbaren Prozessor (z.B. einer Auswerteeinheit einer erfindungsgemäßen Anwenderschnittstelle) in die Lage versetzen, die Schritte eines Verfahrens gemäß dem erstgenannten Erfindungsaspekt auszuführen bzw. die Anwenderschnittstelle in die Lage zu versetzen, dieses Verfahren auszuführen. Das
DVD, Blu-ray-Disc, Flash-Speicher, Festplatte, RAM/ROM, Cache etc., ausgestaltet sein.

Gemäß einem vierten Aspekt der vorliegenden Erfindung wird eine Signalfolge repräsentierend Instruktionen vorgeschlagen, welche einen programmierbaren Prozessor (z.B. einer Auswerteeinheit einer erfindungsgemäßen Anwenderschnittstelle) in die Lage versetzen, die Schritte eines Verfahrens gemäß einem erstgenannten Erfindungsaspekt auszuführen bzw. die Anwenderschnittstelle einzurichten, dieses Verfahren auszuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel (z.B. ein PKW, ein Transporter, ein LKW, ein Motorrad, ein Wasser- und/oder Luftfahrzeug) vorgeschlagen, welches eine Anwenderschnittstelle gemäß dem zweitgenannten Erfindungsaspekt umfasst. Einzelne oder sämtliche Komponenten der Anwenderschnittstelle können dabei insbesondere dauerhaft in die Informationsinfrastruktur des Fortbewegungsmittels integriert sein. Auch eine mechanisch dauerhafte Integration in das Fortbewegungsmittel ist alternativ oder zusätzlich für einzelne oder sämtliche Komponenten der Anwenderschnittstelle vorgesehen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht auf Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine Darstellung eines ersten Anwenderbedienschrittes bei der Bedienung eines Ausführungsbeispiels einer erfindungsgemäßen Anwenderschnittstelle;
- Figur 3: eine Darstellung eines zweiten Anwenderbedienschrittes bei der Bedienung eines Ausführungsbeispiels einer erfindungsgemäßen Anwenderschnittstelle;
- Figur 4: das Ergebnis der in Verbindung mit den Figuren 2 und 3 veranschaulichten Anwenderinteraktion;
- Figur 5: eine Darstellung eines alternativen Ausführungsbeispiels einer erfindungsgemäß ausgestalteten Anwenderschnittstelle 1;
- Figur 6: eine Darstellung des Ergebnisses einer erfindungsgemäßen Erweiterung des in Fig. 5 dargestellten ersten Anzeigeinhaltes;
- Figur 7: ein drittes Ausführungsbeispiel einer erfindungsgemäßen Anwenderschnittstelle;
- Figur 8: das Ergebnis einer erfindungsgemäßen Erweiterung des in Fig. 7 dargestellten ersten Anzeigeinhaltes; und
- Figur 9: ein Flussdiagramm veranschaulichend Schritte eines Ausführungsbeispiels eines erfindungsgemäßen Verfahrens.

### Ausführungsformen der Erfindung

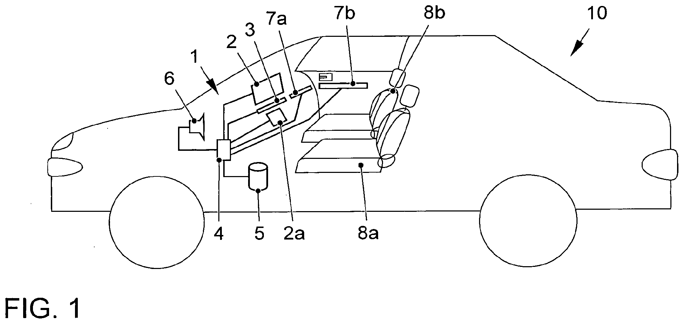

Fig. 1 zeigt einen PKW 10 als Fortbewegungsmittel, in welchem ein Ausführungsbeispiel einer erfindungsgemäßen Anwenderschnittstelle 1 einen kleinen Bildschirm 2a als erste Anzeigeeinrichtung und einen darüber angeordneten größeren Bildschirm 2 als zweite Anzeigeeinrichtung aufweist. Zwischen den Bildschirmen 2, 2a ist eine Infrarot-LED-Leiste 3a als Erfassungseinheit zur Erfassung frei im Raum ausgeführter Gesten vorgesehen und ebenso wie die Bildschirme 2, 2a informationstechnisch mit einem elektronischen Steuergerät 4 als Auswerteeinheit verbunden. Zudem ist das elektronische Steuergerät an einen Datenspeicher 5 angeschlossen, welcher Referenzen für vordefinierte Anwendereingaben/Gesten und Computerprogrammcode zur Ausführung eines erfindungsgemäßen Verfahrens aufweist. Weiter ist das elektronische Steuergerät 4 an einen Lautsprecher 6 zur Ausgabe von Hinweis- und Quittiertönen angeschlossen. Über zusätzliche Steuerleitungen kann das elektronische Steuergerät 4 die Lichtausschüttung von Ambientelichtleisten 7a im Armaturenbrett und 7b in den Türen des PKWs 10 beeinflussen. Ein Fahrersitz 8a und ein Beifahrersitz 8b sind zur Aufnahme eines Fahrers bzw. eines Beifahrers als Anwender der Anwenderschnittstelle 1 vorgesehen.

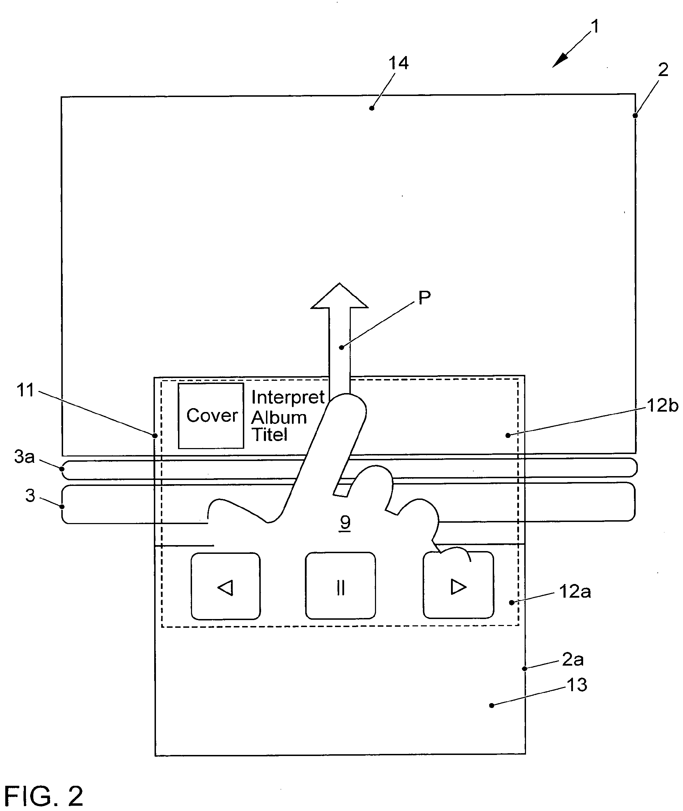

Fig.2 zeigt eine Detailansicht der Oberfläche eines ersten Ausführungsbeispiels einer erfindungsgemäßen Anwenderschnittstelle 1. Auf einem kleineren Bildschirm 2a als erste Anzeigeeinrichtung werden in einem unteren Bereich 13 Heiz-/Klimaumfänge angezeigt. Ein darüber liegender Bereich 12a weist Schaltflächen zum Pausieren einer Medienwiedergabe bzw. zum Anwählen zurückliegender bzw. vorausliegender Titel/Kapitel auf. Der Bereich 12a ist über eine Anzeigefläche 11 (auch "Fenster" oder "Zusatzfenster") als erster Anzeigeinhalt mit Anzeigeelementen in einem Bereich 12b auf dem Bildschirm 2 optisch gruppiert, wodurch sich ein übergreifend angezeigter erster Anzeigeinhalt ergibt. Im Bereich 12b werden ein Cover eines aktuell wiedergegebenen Albums sowie Information zu "Interpret", "Albumtitel" und "Titel" angezeigt. Ein unabhängig von dem Bereich 12b angezeigter Bildschirminhalt 14 als zweiter Anzeigeinhalt des Bildschirms 2 kann thematisch unabhängig vom Inhalt der Anzeigefläche 11 gewählt werden. Zwischen den Bildschirmen 2, 2a befinden sich eine Fingerleiste 3 zur geführten Entgegennahme von Wischgesten eines Anwenders und eine Infrarot-LED-Leiste 3a zur Erfassung von 3D-Gesten einer Hand 9 eines Anwenders. Zur erfindungsgemäßen Erweiterung der Anzeigefläche 11 führt der Zeigefinger der Hand 9 des Anwenders eine Wischgeste entlang des Pfeils P aus, welche auf dem Bereich 12b startet und in Richtung der Bildschirmmitte des Bildschirms 2 orientiert ist.

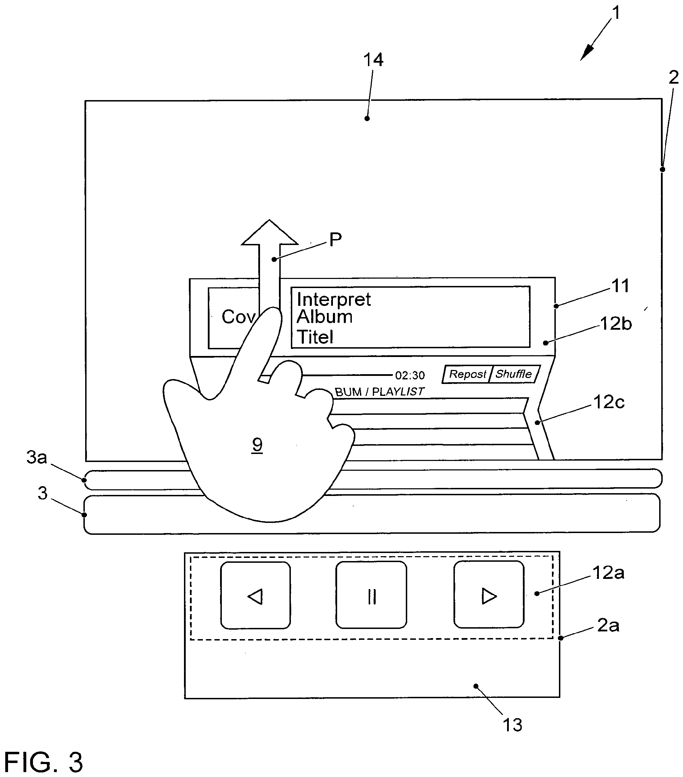

Fig.3 zeigt ein Zwischenergebnis der in Fig. 2 gestarteten Wischgeste der Hand 9 des Anwenders. Die Anzeigefläche 11 wird dadurch erweitert, dass zwischen dem Bereich 12a und dem Bereich 12b ein Bereich 12c umfassend zusätzliche Informationen und Schaltflächen/Schieberegler zur Einflussnahme auf die aktuelle Medienwiedergabe erscheint. Um den temporären Charakter der Erweiterung der Anzeigefläche 11 und die originäre Verankerung der Anzeigefläche 11 im Bildschirm 2a zu bekräftigen, wird der Bereich 12c nach Art eines Entfaltungsvorgangs optisch animiert.

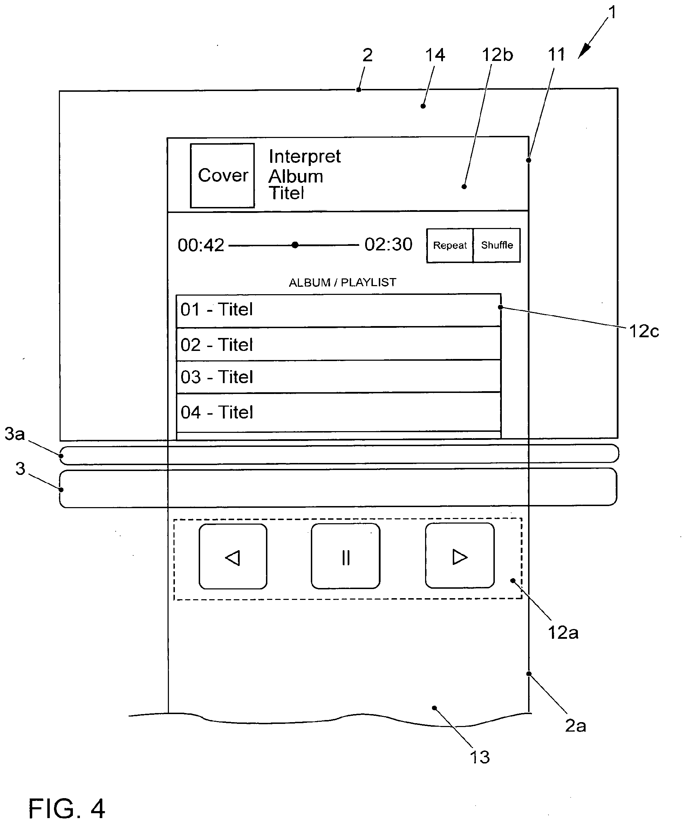

Fig. 4 zeigt das Ergebnis des in Fig. 2 gestarteten und in Fig. 3 fortgeführten Anwenderbedienschrittes, durch welchen die Anzeigefläche 11 neben den Bereichen 12a, 12b einen vollständig entfalteten Bereich 12c zeigt. Die Richtung der Anwendereingabe (Pfeil P in Fig. 3) entspricht der anspruchsgemäßen ersten Richtung, in welcher die Bildschirme 2, 2a hintereinander bzw. übereinander angeordnet sind. Erkennbar weisen die Bildschirme 2, 2a senkrecht zur Haupterstreckungsrichtung der Fingerleiste 3 unterschiedliche Breiten auf, wobei der Bildschirm 2a schmaler als der Bildschirm 2 ausgestaltet ist. Auch der sich auf der dem zweiten Bildschirm 2 erstreckende Flächenbereich der Anzeigefläche 11 ist hinsichtlich einer Breite und der Position seiner parallel zur Richtung des Pfeils P orientierten Ränder entsprechend dem Bildschirm 2a begrenzt. Hierbei sind die Bereiche 12a, 12b, 12c derart nächstliegend zueinander angeordnet, dass die Anzeigefläche 11 nicht durch themenfremde Anzeigeelemente durchbrochen ist. Lediglich die Hardwareelemente Fingerleiste 3 und Infrarot-LED-Leiste 3a durchbrechen die ansonsten nach Art eines kompakten Fensters gestaltete Anzeigefläche 11. Sämtliche Bereich der Anzeigefläche 11, welche nicht einer gesonderten Funktion/Schaltfläche zugeordnet sind, können verwendet werden, um durch Entgegennahmen einer Tippgeste die erfindungsgemäße Erweiterung der Anzeigefläche 11 rückgängig zu machen und in eine Konfiguration gemäß Fig. 2 zurückzukehren. Entsprechendes gilt für auf dem Bildschirm 2 angezeigte zweite Anzeigeinhalte 14, welchen in der Darstellung nach Fig. 4 keine eigene Bedienfunktion zugeordnet ist.

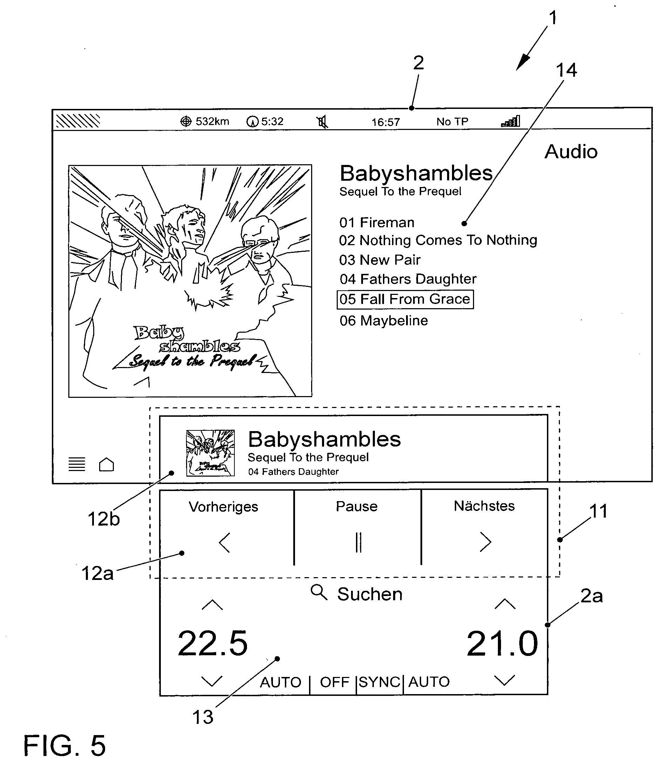

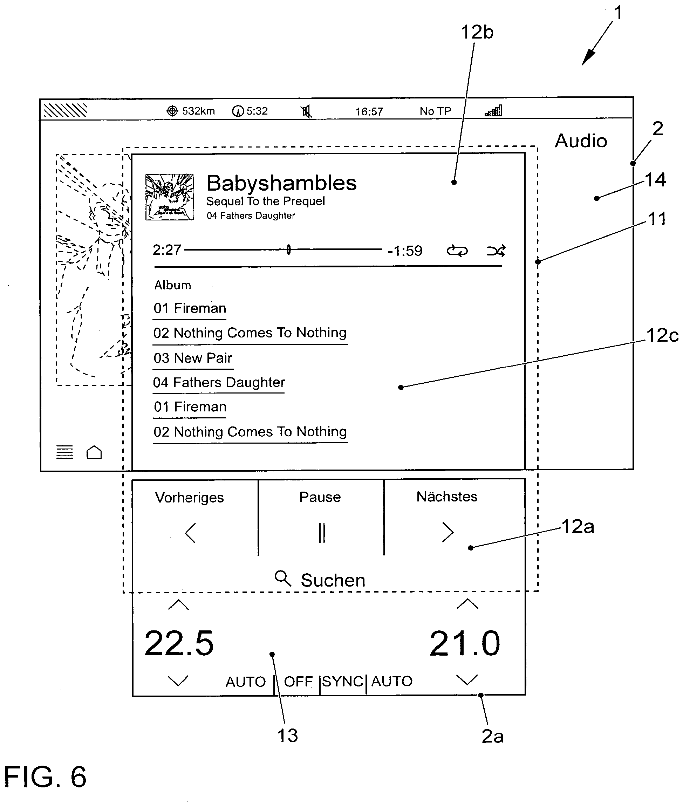

Fig. 5 zeigt eine alternative Darstellung eines zweiten Ausführungsbeispiels einer Oberfläche einer erfindungsgemäßen Anwenderschnittstelle 1. Die Klimabedienumfänge 13 innerhalb des Bildschirms 2a sind nach Art von Schaltflächen Implementiert-/Dekrementierschaltflächen zur Anpassung einer Innenraumtemperatur für die Fahrer-/Beifahrerseite ausgestaltet. Der zweite Anzeigeinhalt 14 des Bildschirms 2 ist ebenso wie die Anzeigefläche 11 einer aktuellen Audiowiedergabe zugeordnet, weist jedoch aktuell keine Schaltflächen zur Steuerung der Audiowiedergabe auf. Die Bedienelemente des Bereiches 12a entsprechen im Wesentlichen denjenigen des ersten Ausführungsbeispiels (Fign. 2-4), sind jedoch um eine "Suchen"-Schaltfläche erweitert worden. Die Anzeigefläche 11 weist im auf dem zweiten Bildschirm 2 angeordneten Bereich 12b im Wesentlichen dieselben Informationen auf, welche im zweiten Anzeigeinhalt 14 enthalten sind. Daher dient der Bereich 12b im Wesentlichen als Anfasser zur erfindungsgemäßen Erweiterung der Anzeigefläche 11. Der Bereich 12b kann also verwendet werden, um durch Entgegennahme einer Tipp-Geste oder einer auf dem Bereich 12b gestarteten Wischgeste in Richtung der Mitte des Bildschirms 2, die in Fig. 6 dargestellte Anordnung einer erfindungsgemäß erweiterten Anzeigefläche 11 zu erzeugen.

Fig. 6 zeigt das Ergebnis einer erfindungsgemäßen Erweiterung der Anzeigefläche 11 um einen Bereich 12c, welcher eine Titelliste, Schaltflächen und einen Schieberegler zur Entgegennahme zusätzlicher Anwenderbefehle bezüglich der Medienwiedergabe aufweist. Die Anzeigefläche 11 stellt ein Fenster dar, welches auf dem Bildschirm 2 gegenüber dem bislang scharf, farbig und hell dargestellten Bildschirminhalt 14 optisch klar mit einem Fokus belegt ist, indem der Bildschirminhalt 14 nun unscharf, abgedunkelt und mit verringerter Farbsättigung dargestellt wird. Eine Anwendereingabe in Form einer Wischgeste auf den Bereich 12b, einer Tippgeste auf den Bereich 12b oder einer Tippgeste auf den Bildschirminhalt 14 macht die erfindungsgemäße Erweiterung der Anzeigefläche 11 rückgängig, sodass im Ergebnis erneut die in Fig. 5 dargestellte Konfiguration dargestellt wird.

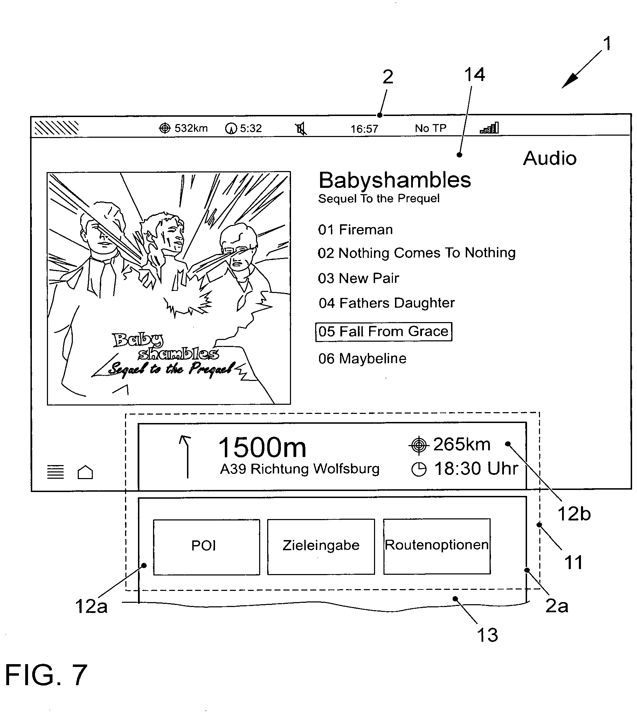

Fig. 7 zeigt eine Ansicht eines dritten Ausführungsbeispiels einer erfindungsgemäßen Anwenderschnittstelle 1, in welcher die Anzeigefläche 11 einer Funktionsfamilie zum Thema Routenführung zugeordnet ist. Der Bereich 12a zeigt nun Schaltflächen zur Zieleingabe, zum Aufrufen von Routenoptionen und zur Anzeige nahegelegener Sehenswürdigkeiten. Der Bereich 12b zeigt zusammenfassende Informationen bezüglich einer aktuellen Entfernung zum Routenziel, eine zu erwartende Ankunftszeit und Information zu einem nächsten anstehenden Manöver. Der übrige Bildschirminhalt 14 des Bildschirms 2 ist entsprechend der Fig. 5 einer aktuellen Medienwiedergabe zugeordnet.

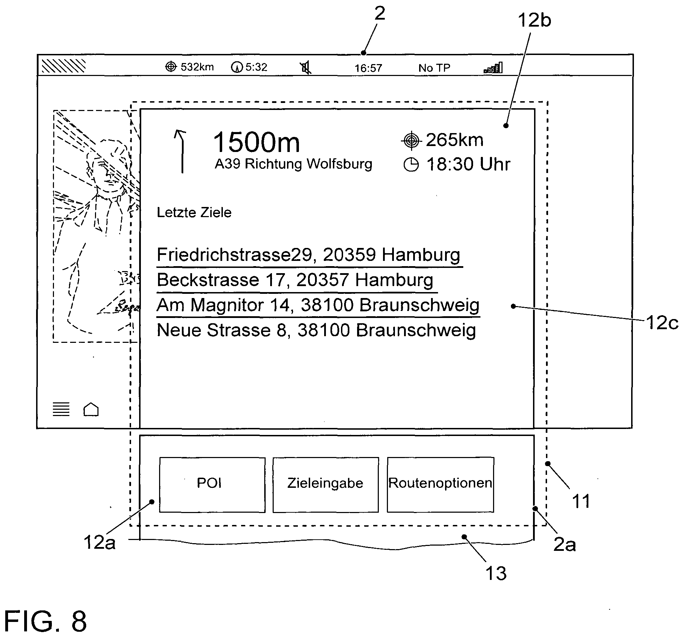

Fig. 8 zeigt das Ergebnis einer (nicht-dargestellten) Tippgeste eines Anwenders auf den in Fig. 7 gezeigten Bereich 12b der Anzeigefläche 11. Im Ansprechen auf die Anwendereingabe wird die Anzeigefläche 11 auf dem zweiten Bildschirm 2 erfindungsgemäß durch Einfügung eines Bereiches 12c erweitert, in welchem eine Liste letzter Ziele angezeigt und zur Auswahl bereit gehalten wird. Wie in Verbindung mit Fig. 6 beschrieben, wird der übrige Bildschirminhalt 14 im Ansprechen auf die erfindungsgemäße Erweiterung unscharf, abgedunkelt und sepia-farben dargestellt, um den temporären Charakter der erfindungsgemäßen Erweiterung der Anzeigefläche 11 zu unterstreichen und den Anwender zu animieren, durch eine Tippgeste auf den Bildschirminhalt 14 die erfindungsgemäße Erweiterung der Anzeigefläche 11 rückgängig zu machen.

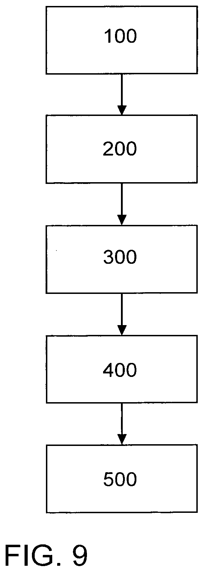

Fig. 9 zeigt ein Flussdiagramm veranschaulichend Schritte eines Verfahrens zur übergreifenden Anzeige eines Anzeigeinhaltes einer Anwenderschnittstelle eines Fortbewegungsmittels. In Schritt 100 wird ein erster Anzeigeinhalt auf einer ersten Anzeigeeinrichtung des Fortbewegungsmittels angezeigt. Ein Teil des Anzeigeinhaltes wird zudem auf einer zweiten Anzeigeeinrichtung des Fortbewegungsmittels angezeigt. Im Schritt 200 wird eine vordefinierte Anwendereingabe bezüglich des ersten Anzeigeinhaltes empfangen. Die vordefinierte Anwendereingabe umfasst eine Wischgeste, welche auf einer Oberfläche innerhalb des ersten Anzeigeinhaltes startet und in Richtung einer zweiten Anzeigeeinrichtung des Fortbewegungsmittels orientiert ist. Im Ansprechen darauf wird im Schritt 300 eine dem ersten Anzeigeinhalt zugeordnete Fläche auf der zweiten Anzeigeeinrichtung des Fortbewegungsmittels erweitert. Mit anderen Worten wird eine der Mitte der zweiten Anzeigeeinrichtung nächstliegende Begrenzung des ersten Anzeigeinhaltes in Richtung eines der ersten Anzeigeeinrichtung abgewandten Randes der zweiten Anzeigeeinrichtung verschoben. In Schritt 400 wird zur Reduzierung der Fläche des ersten Anzeigeinhaltes auf der zweiten Anzeigeeinrichtung eine Wischgeste in Richtung der ersten Anzeigeeinrichtung empfangen. Die Wischgeste startet auf dem ersten Anzeigeinhalt auf der zweiten Anzeigeeinrichtung. In Schritt 500 wird im Ansprechen darauf die dem ersten Anzeigeinhalt zugeordnete Fläche auf der zweiten Anzeigeeinrichtung des Fortbewegungsmittels wieder verringert. Eine zwischenzeitliche unscharfe Darstellung und Verdunklung übriger, auf der zweiten Anzeigeeinrichtung angezeigter Bildschirminhalte wird nun wieder rückgängig gemacht, um dem Anwender die wiederhergestellte Bedienbarkeit dieser Bildschirminhalte zu veranschaulichen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: (Primär-)bildschirm
- 2a: (Sekundär-)bildschirm
- 3: Fingerleiste
- 3a: Infrarot-LED-Leiste
- 4: elektronisches Steuergerät
- 5: Datenspeicher
- 6: Lautsprecher
- 7a, 7b: Ambientelichtleisten
- 8a: Fahrersitz
- 8b: Beifahrersitz
- 9: Hand des Anwenders
- 10: PKW
- 11: Anzeigefläche/erster Anzeigeinhalt
- 12a, 12b, 12c: Bereiche der Anzeigefläche
- 13: Heiz-/Klimabedienumfänge
- 14: Bildschirminhalt/ zweiter Anzeigeinhalt
- 100-500: Bedienschritte
- P: Pfeil

## Patentansprüche

1. Verfahren zur Anzeige eines ersten Anzeigeinhaltes (11) einer Anwenderschnittstelle (1) eines Fortbewegungsmittels (10) übergreifend auf einer ersten Anzeigeeinrichtung (2a) und auf einer ausgehend von der ersten Anzeigeeinrichtung (2a) in einer ersten Richtung (P) gelegenen zweiten Anzeigeeinrichtung (2),
wobei die Breite der ersten Anzeigeeinrichtung (2a) der Anwenderschnittstelle (1) bezüglich der ersten Richtung (P) kleiner ist als die Breite der zweiten Anzeigeeinrichtung (2) der Anwenderschnittstelle (1) bezüglich der ersten Richtung (P), umfassend die Schritte:
- Anzeigen (100) eines ersten Bereiches (12a) des ersten Anzeigeinhaltes (11) auf der ersten Anzeigeeinrichtung (2a) des Fortbewegungsmittels (10),
- Anzeigen (100) eines zweiten Bereiches (12b) des ersten Anzeigeinhaltes (11) auf der zweiten Anzeigeeinrichtung (2) des Fortbewegungsmittels (10) in der Breite der ersten Anzeigeeinrichtung (2a),
- Empfangen (200) einer vordefinierten Anwendereingabe bezüglich des ersten Anzeigeinhaltes (11) und
**gekennzeichnet durch** im Ansprechen darauf
- Erweitern (300) einer dem ersten Anzeigeinhalt (11) zugeordneten Fläche auf der ausgehend von der ersten Anzeigeeinrichtung (2a) in der ersten Richtung (P) gelegenen zweiten Anzeigeeinrichtung (2) des Fortbewegungsmittels (10), wobei
- beim Erweitern der dem ersten Anzeigeinhalt (11) zugeordneten Fläche auf der zweiten Anzeigeeinrichtung (2) ein dritter Bereich (12c) auf der zweiten Anzeigeeinrichtung (2) zusätzlich erscheint, das Erweitern ausschließlich auf der Breite der ersten Anzeigeeinrichtung (2a) erfolgt und
eine dem ersten Anzeigeinhalt (11) zugeordnete Fläche auf der zweiten Anzeigeeinrichtung (2) der ersten Anzeigeeinrichtung (2a) nächstliegend angeordnet ist.

2. Verfahren nach Anspruch 1 weiter umfassend die Schritte
- Anzeigen eines zweiten Anzeigeinhaltes (14) auf der zweiten Anzeigeeinrichtung (2) des Fortbewegungsmittels (10).

3. Verfahren nach Anspruch 2, wobei der erste Anzeigeinhalt (11) einen optisch geschlossen gegenüber dem zweiten Anzeigeinhalt (14) auf der zweiten Anzeigeeinrichtung (2) erscheinenden Rand aufweist.

4. Verfahren nach Anspruch 2 oder 3, wobei das Erweitern der dem ersten Anzeigeinhalt (14) zugeordneten Fläche auf die zweite Anzeigeeinrichtung (2) des Fortbewegungsmittels (10) umfasst:
- Überlagern und/oder Ersetzen des zweiten Anzeigeinhaltes (14) auf der zweiten Anzeigeeinrichtung (2) in einem Teilbereich der zweiten Anzeigeeinrichtung (2), und
- fortwährendes Anzeigen des zweiten Anzeigeinhaltes (14) in übrigen Teilbereichen der zweiten Anzeigeeinrichtung (2).

5. Verfahren nach Anspruch 4, wobei das
- fortwährende Anzeigen des zweiten Anzeigeinhaltes (14) in übrigen Teilbereichen der zweiten Anzeigeeinrichtung (2) in einer modifizierten optischen Darstellung, insbesondere in einer
- unscharfen Darstellung, und/oder
- abgedunkelten Darstellung, und/oder
- verkleinerten Darstellung, und/oder
- verringerten Farbsättigung
erfolgt.

6. Verfahren nach einem der Ansprüche 2 bis 5, weiter umfassend
- Empfangen (400)
- einer Wischgeste in Richtung der ersten Anzeigeeinrichtung (2a), und/oder
- einer Tippgeste auf den zweiten Anzeigeinhalt (14) auf der zweiten Anzeigeeinrichtung (2), und
im Ansprechen darauf
- Verringern (500) der dem ersten Anzeigeinhalt (11) zugeordneten Fläche auf der zweiten Anzeigeeinrichtung (2) des Fortbewegungsmittels (10), wobei der dritte Bereich (12c) auf der zweiten Anzeigeeinrichtung (2) entfällt.

7. Anwenderschnittstelle (1) für ein Fortbewegungsmittel (10) umfassend
- eine erste Anzeigeeinrichtung (2a),
- eine ausgehend von der ersten Anzeigeeinrichtung (2a) in einer ersten Richtung (P) gelegene zweite Anzeigeeinrichtung (2), wobei die Breite der ersten Anzeigeeinrichtung (2a) bezüglich der ersten Richtung (P) kleiner als die Breite der zweiten Anzeigeeinrichtung (2) bezüglich der ersten Richtung (P) ist,
- eine Erfassungseinheit (3, 3a) zur Erfassung von Anwendergesten, und
- eine Auswerteeinheit (4), wobei
- die erste Anzeigeeinrichtung (2a) eingerichtet ist, einen ersten Bereich (12a) eines ersten Anzeigeinhaltes (11) anzuzeigen,
- die zweite Anzeigeeinrichtung (2) eingerichtet ist, einen zweiten Bereich (12b) des ersten Anzeigeinhaltes (11) auf der Breite der ersten Anzeigeeinrichtung (2a) anzuzeigen,
- die Erfassungseinheit (3, 3a) eingerichtet ist, eine vordefinierte Anwendereingabe bezüglich des ersten Anzeigeinhaltes (11) zu empfangen, **dadurch gekennzeichnet, dass**
- die Auswerteeinheit (4) eingerichtet ist, im Ansprechen auf das Erfassen der vordefinierten Anwendereingabe
- eine dem ersten Anzeigeinhalt (11) zugeordnete Fläche auf der zweiten Anzeigeeinrichtung (2) des Fortbewegungsmittels (10) zu erweitern, wobei beim Erweitern der dem ersten Anzeigeinhalt (11) zugeordneten Fläche auf der zweiten Anzeigeeinrichtung (2) ein dritter Bereich (12c) auf der zweiten Anzeigeeinrichtung (2) zusätzlich erscheint, das Erweitern ausschließlich auf der Breite der ersten Anzeigeeinrichtung (2a) erfolgt und eine dem ersten Anzeigeinhalt (11) zugeordnete Fläche auf der zweiten Anzeigeeinrichtung (2) der ersten Anzeigeeinrichtung (2a) nächstliegend angeordnet ist.

8. Anwenderschnittstelle nach einem der vorstehenden Ansprüche, wobei die erste Anzeigeeinrichtung (2a) und die zweite Anzeigeeinrichtung (2a)
- bezüglich einer ersten Richtung (P) untereinander bzw. nebeneinander angeordnet sind, und
- unterschiedliche Größen und/oder Seitenverhältnisse aufweisen.

9. Anwenderschnittstelle nach einem der Ansprüche 7 oder 8, wobei
- eine dem ersten Anzeigeinhalt (11) zugeordnete Fläche auf der ersten Anzeigeeinrichtung (2a) der zweiten Anzeigeeinrichtung (2) nächstliegend und
- eine dem ersten Anzeigeinhalt (11) zugeordnete Fläche auf der zweiten Anzeigeeinrichtung (2) der ersten Anzeigeeinrichtung (2a) nächstliegend angeordnet sind.

10. Anwenderschnittstelle nach einem der Ansprüche 7 bis 9, wobei die vordefinierte Anwendereingabe
- eine Wischgeste in Richtung einer Mitte der zweiten Anzeigeeinrichtung (2), und/oder
- eine Tipp-Geste auf eine Schaltfläche umfasst, welche insbesondere in einem der ersten Anzeigeeinrichtung (2a) nächstliegenden Flächenbereich der zweiten Anzeigeeinrichtung (2) oder in einem der zweiten Anzeigeeinrichtung (2) nächstliegenden Flächenbereich der ersten Anzeigeeinrichtung (2a) dargestellt wird.

11. Computerprogrammprodukt umfassend Instruktionen, welche, wenn Sie auf einer Auswerteeinheit (4) einer Anwenderschnittstelle (1) nach einem der Ansprüche 7 bis 10 ausgeführt werden, die Auswerteeinheit (4) veranlassen, die Schritte eines Verfahrens nach einem der Ansprüche 1 bis 6 durchzuführen.

12. Signalfolge repräsentierend Instruktionen, welche, wenn Sie auf einer Auswerteeinheit (4) einer Anwenderschnittstelle (1) nach einem der Ansprüche 7 bis 10 ausgeführt werden, die Auswerteeinheit (4) veranlassen, die Schritte eines Verfahrens nach einem der Ansprüche 1 bis 6 durchzuführen.

13. Fortbewegungsmittel umfassend eine Anwenderschnittstelle (1) nach einem der Ansprüche 7 bis 10.

## Claims

1. Method for the display of first display contents (11) of a user interface (1) of a transportation means (10) in a comprehensive manner on a first display device (2a) and on a second display device (2) which is in a first direction (P) starting from the first display device (2a),
wherein the width of the first display device (2a) of the user interface (1) with respect to the first direction (P) is smaller than the width of the second display device (2) of the user interface (1) with respect to the first direction (P), comprising the steps of:
- displaying (100) a first region (12a) of the first display contents (11) on the first display device (2a) of the transportation means (10),
- displaying (100) a second region (12b) of the first display contents (11) on the second display device (2) of the transportation means (10) over the width of the first display device (2a),
- receiving (200) a predefined user input with respect to the first display contents (11), and **characterized by**, in response thereto,
- extending (300) an area associated with the first display contents (11) on the second display device (2) of the transportation means (10), which second display device is in the first direction (P) starting from the first display device (2a), wherein
- when extending the area associated with the first display contents (11) on the second display device (2), a third region (12c) additionally appears on the second display device (2), the extension takes place only to the width of the first display device (2a) and an area associated with the first display contents (11) on the second display device (2) is arranged closest to the first display device (2a).

2. Method according to Claim 1, also comprising the steps of
- displaying second display contents (14) on the second display device (2) of the transportation means (10).

3. Method according to Claim 2, the first display contents (11) having an edge which appears to be optically closed with respect to the second display contents (14) on the second display device (2) .

4. Method according to Claim 2 or 3, the operation of extending the area associated with the first display contents (14) to the second display device (2) of the transportation means (10) comprising:
- superimposing and/or replacing the second display contents (14) on the second display device (2) in a section of the second display device (2), and
- continuously displaying the second display contents (14) in other sections of the second display device (2).

5. Method according to Claim 4,
- the second display contents (14) being continuously displayed in other sections of the second display device (2) in a modified optical display, in particular in
- a blurred display, and/or
- a dimmed display, and/or
- a reduced display, and/or
- a reduced color saturation.

6. Method according to one of Claims 2 to 5, also comprising
- receiving (400)
- a swiping gesture in the direction of the first display device (2a), and/or
- a tapping gesture on the second display contents (14) on the second display device (2), and
in response thereto
- reducing (500) the area associated with the first display contents (11) on the second display device (2) of the transportation means (10), wherein the third region (12c) on the second display device (2) is dispersed with.

7. User interface (1) for a transportation means (10), comprising
- a first display device (2a),
- a second display device (2) in a first direction (P) starting from the first display device (2a), the width of the first display device (2a) with respect to the first direction (P) being smaller than the width of the second display device (2) with respect to the first direction (P),
- a detection unit (3, 3a) for detecting user gestures, and
- an evaluation unit (4),
- the first display device (2a) being set up to display a first region (12a) of a first display contents (11),
- the second display device (2) being set up to display a second region (12b) of the first display contents (11) over the width of the first display device (2a),
- the detection unit (3, 3a) being set up to receive a predefined user input with respect to the first display contents (11), **characterized in that**
- the evaluation unit (4) is set up, in response to the detection of the predefined user input,
- to extend an area associated with the first display contents (11) on the second display device (2) of the transportation means (10), wherein when extending the area associated with the first display contents (11) on the second display device (2), a third region (12c) additionally appears on the second display device (2), the extension takes place only to the width of the first display device (2a) and an area associated with the first display contents (11) on the second display device (2) is arranged closest to the first display device (2a).

8. User interface according to one of the preceding claims, the first display device (2a) and the second display device (2a)
- being arranged below one another or beside one another with respect to a first direction (P), and
- having different sizes and/or aspect ratios.

9. User interface according to either of Claims 7 and 8,
- an area associated with the first display contents (11) on the first display device (2a) being arranged closest to the second display device (2), and
- an area associated with the first display contents (11) on the second display device (2) being arranged closest to the first display device (2a).

10. User interface according to one of Claims 7 to 9, the predefined user input comprising
- a swiping gesture in the direction of a center of the second display device (2), and/or
- a tapping gesture on a button which is displayed, in particular, in a region of the second display device (2) which is closest to the first display device (2a) or in a region of the first display device (2a) which is closest to the second display device (2).

11. Computer program product comprising instructions which, when executed on an evaluation unit (4) of a user interface (1) according to one of Claims 7 to 10, cause the evaluation unit (4) to carry out the steps of a method according to one of Claims 1 to 6.

12. Signal sequence representing instructions which, when executed on an evaluation unit (4) of a user interface (1) according to one of Claims 7 to 10, cause the evaluation unit (4) to carry out the steps of a method according to one of Claims 1 to 6.

13. Transportation means comprising a user interface (1) according to one of Claims 7 to 10.

## Revendications

1. Procédé d'affichage d'un premier contenu d'affichage (11) d'une interface utilisateur (1) d'un moyen de locomotion (10) de manière à ce qu'il s'étende sur un premier dispositif d'affichage (2a) et sur un deuxième dispositif d'affichage (2) situé dans une première direction (P) partant du premier dispositif d'affichage (2a),
dans lequel la largeur du premier dispositif d'affichage (2a) de l'interface utilisateur (1) par rapport à la première direction (P) est inférieure à la largeur du deuxième dispositif d'affichage (2) de l'interface utilisateur (1) par rapport à la première direction (P), comprenant les étapes consistant à :
- afficher (100) une première région (12a) du premier contenu d'affichage (11) sur le premier dispositif d'affichage (2a) du moyen de locomotion (10),
- afficher (100) une deuxième région (12b) du premier contenu d'affichage (11) sur le deuxième dispositif d'affichage (2) du moyen de locomotion (10) sur la largeur du premier dispositif d'affichage (2a),
- recevoir (200) une entrée d'utilisateur prédéfinie relative au premier contenu d'affichage (11) ; et caractérisé, en réponse à cela, par l'étape consistant à
- étendre (300) une zone associée au premier contenu d'affichage (11) sur le deuxième dispositif d'affichage (2), qui est situé dans la première direction (P) en partant du premier dispositif d'affichage (2a), du moyen de locomotion (10), dans lequel
- une troisième zone (12c) apparaît en outre sur le deuxième dispositif d'affichage (2) lorsque la zone associée au premier contenu d'affichage (11) sur le deuxième dispositif d'affichage (2) est étendue, l'extension se produit exclusivement sur la largeur du premier dispositif d'affichage (2a), et une zone associée au premier contenu d'affichage (11) est disposée sur le deuxième dispositif d'affichage (2) le plus près du premier dispositif d'affichage (2a).

2. Procédé selon la revendication 1, comprenant en outre l'étape consistant à
- afficher un deuxième contenu d'affichage (14) sur le deuxième dispositif d'affichage (2) du moyen de locomotion (10).

3. Procédé selon la revendication 2, dans lequel le premier contenu d'affichage (11) présente sur le deuxième dispositif d'affichage (2) un bord qui apparaît optiquement fermé par rapport au deuxième contenu d'affichage (14).

4. Procédé selon la revendication 2 ou 3, dans lequel l'extension de la zone associée au premier contenu d'affichage (14) sur le deuxième dispositif d'affichage (2) du moyen de locomotion (10) consiste à :
- superposer et/ou remplacer le deuxième contenu d'affichage (14) sur le deuxième dispositif d'affichage (2) dans une région partielle du deuxième dispositif d'affichage (2), et
- afficher en continu le deuxième contenu d'affichage (14) dans des régions partielles restantes du deuxième dispositif d'affichage (2).

5. Procédé selon la revendication 4, dans lequel
- l'affichage en continu du deuxième contenu d'affichage (14) dans des régions partielles restantes du deuxième dispositif d'affichage (2) selon une représentation optique modifiée, est en particulier effectuée
- en représentation floue, et/ou
- en représentation assombrie, et/ou
- en représentation réduite, et/ou
- avec une saturation réduite des couleurs.

6. Procédé selon l'une des revendications 2 à 5, consistant en outre à
- recevoir (400)
- un geste d'essuyage dans la direction du premier dispositif d'affichage (2a), et/ou
- un geste tactile sur le deuxième contenu d'affichage (14) sur le deuxième dispositif d'affichage (2), et en réponse à cela, à
- réduire (500) la zone associée au premier contenu d'affichage (11) sur le deuxième dispositif d'affichage (2) du moyen de locomotion (10), dans lequel la troisième région (12c) n'est pas présente sur le deuxième dispositif d'affichage (2).

7. Interface utilisateur (1) destinée à un moyen de locomotion (10), comprenant
- un premier dispositif d'affichage (2a),
- un deuxième dispositif d'affichage (2) situé dans une première direction (P) en partant du premier dispositif d'affichage (2a), dans laquelle la largeur du premier dispositif d'affichage (2a) par rapport à la première direction (P) est inférieure à la largeur du deuxième dispositif d'affichage (2) par rapport à la première direction (P),
- une unité de détection (3, 3a) destinée à détecter des gestes de l'utilisateur, et
- une unité d'évaluation (4), dans laquelle
- le premier dispositif d'affichage (2a) est conçu pour afficher une première région (12a) d'un premier contenu d'affichage (11),
- le deuxième dispositif d'affichage (2) est conçu pour afficher une deuxième région (12b) du premier contenu d'affichage (11) sur la largeur du premier dispositif d'affichage (2a),
- l'unité de détection (3, 3a) est conçue pour recevoir une entrée d'utilisateur prédéfinie relative au premier contenu d'affichage (11),
**caractérisée en ce que**
- l'unité d'évaluation (4) est conçue, en réponse à la détection de l'entrée d'utilisateur prédéfinie,
- pour étendre une zone associée au premier contenu d'affichage (11) sur le deuxième dispositif d'affichage (2) du moyen de locomotion (10), dans laquelle, lors de l'extension de la zone associée au premier contenu d'affichage (11) sur le deuxième dispositif d'affichage (2), une troisième zone (12c) apparaît en outre sur le deuxième dispositif d'affichage (2), l'extension se produit exclusivement sur la largeur du premier dispositif d'affichage (2a), et une zone associée au premier contenu d'affichage (11) est disposée sur le deuxième dispositif d'affichage (2) le plus près du premier dispositif d'affichage (2a).

8. Interface utilisateur selon l'une des revendications précédentes, dans laquelle le premier dispositif d'affichage (2a) et le deuxième dispositif d'affichage (2a)
- sont disposés l'un au-dessous de l'autre ou côte à côte par rapport à une première direction (P), et
- présentent des tailles et/ou des rapports de dimensions différents.

9. Interface utilisateur selon l'une des revendications 7 ou 8, dans laquelle
- une zone associée au premier contenu d'affichage (11) est disposée sur le premier dispositif d'affichage (2a) le plus près du deuxième dispositif d'affichage (2), et
- une zone associée au premier contenu d'affichage (11) est disposée sur le deuxième dispositif d'affichage (2) le plus près du premier dispositif d'affichage (2a).

10. Interface utilisateur selon l'une des revendications 7 à 9, dans laquelle l'entrée d'utilisateur prédéfinie
- comprend un geste d'essuyage dans la direction d'un centre du deuxième dispositif d'affichage (2), et/ou
- comprend un geste tactile sur une zone de bouton qui est affichée en particulier dans une région de surface du deuxième dispositif d'affichage (2) qui est la plus proche du premier dispositif d'affichage (2a) ou dans une région de surface du premier dispositif d'affichage (2a) qui est la plus proche du deuxième dispositif d'affichage (2) .

11. Produit de programme informatique comprenant des instructions qui, lorsqu'elles sont exécutées sur une unité d'évaluation (4) d'une interface utilisateur (1) selon l'une des revendications 7 à 10, amènent l'unité d'évaluation (4) à exécuter les étapes d'un procédé selon l'une des revendications 1 à 6.

12. Séquence de signaux représentant des instructions qui, lorsqu'elles sont exécutées sur une unité d'évaluation (4) d'une interface utilisateur (1) selon l'une des revendications 7 à 10, amènent l'unité d'évaluation (4) à exécuter les étapes d'un procédé selon une des revendications 1 à 6.

13. Moyen de locomotion comprenant une interface utilisateur (1) selon l'une des revendications 7 à 10.
